# EUROPEAN PATENT SPECIFICATION

(11) **EP 1 185 480 B1**
(45) Date of publication and mention of the grant of the patent: **26.11.2003**
(21) Application number: 00940284.3
(22) Date of filing: 26.05.2000
(51) Int. Cl.: B67D 1/08, F16L 37/32

(54) **COUPLING**
KUPPLUNG
COUPLAGE

(30) Priority: 10.06.1999 EP 99201850
(43) Date of publication of application: 13.03.2002
(73) Proprietor: JohnsonDiversey, Inc., Sturtevant, Wisconsin 53177-0902 (US)
(72) Inventor: BUNSCHOTEN, Gerrit, Klaas, 3606 AN Maarssen (NL); HAWORTH, Brian, David, 3606 AN Maarssen (NL); VAN DER HEIJDEN, Lambertus, Gerardus, 3606 AN Maarssen (NL)
(74) Representative: Ruschke, Hans Edvard, Dipl.-Ing.
(86) International application number: EP0004920
(87) International publication number: WO00076907

(56) References cited:
- EP-A- 0 270 302
- EP-A- 0 675 072
- US-A- 2 509 444
- US-A- 4 949 745
- US-A- 4 951 710
- US-A- 5 211 197

## Description

### Field of the invention

The present invention pertains to a coupling for interconnecting two hollow bodies, the coupling comprising first and second interconnectable members for attachment of each one to an orifice of a respective body so as to allow fluid flow between the interiors of the bodies when interconnected by the coupling and to seal the orifices when uncoupled, the first member comprising a cylindrical wall, the second member comprising a cylindrical wall having an outer diameter that is smaller than the inner diameter of the wall of the first member, wherein the cylindrical wall of first member is provided with two or more projections or two or more grooves on its inner side and the cylindrical wall of the second member is provided with corresponding grooves or projections respectively, on its outer side, wherein the projections and/or the beginning of the grooves are located at a distance from the end of the respective cylindrical wall, wherein the ratio of the tolerance, between the cylindrical wall of the first member and the cylindrical wall of the second member, and said distance is smaller than a certain value.

### Background of the invention

European patent application 0 270 302 describes a coupling for a liquid product packaging and dispensing assembly in which liquid is pumped from a container via the coupling through a tube to the point of use. The coupling has a first interconnectable member with a hollow post and a biased sleeve closing openings in the hollow post and a second interconnectable member with a hollow sheath and a biased piston closing an opening at the end of the sheath. The parts are configured so that, upon connection, the post unseats the piston while the sheath displaces the sleeve, thereby allowing liquid flow.

In one form, the container may be collapsible and is preferably situated inside a box for convenience during storage and transport. EP 0 270 302 mentions that a problem arising with such containers resides in that upon uncoupling the container from the tube, residues of the liquid which has been flowing through the coupling between them are apt to be spilled. This can be hazardous if the liquid is noxious, for example if the liquid is a very alkaline product such as industrial mechanical dishwashing liquid.

The coupling according to EP 270 302 indeed has the advantage that when it is disconnected both hollow bodies are sealed, and that it reduces or even obviates spillage. However, it appeared that when e.g. an operator connects the first and second members, the projection(s) and the corresponding groove(s) often do not engage properly. This can result in, int. al., damage to the coupling itself, loss of time and/or spillage.

US patent 2,509,444 describes a separable fluid coupling with first and second coupling members, holding means effective when the coupling members are in coupling position for retaining the coupling members in coupling position wherein they are in axial alignment, locking means effective when the coupling members are held against axial separation for locking the coupling members against relative rotation, and means effective at least when the coupling members are in a coupling position for resiliently opposing axial separation for the coupling members.

Thus, the coupling according to US 2,509,444 provides a fluid coupling which securely maintains two sections of a fluid conduit in coupled relation and which prevents any substantial loss of fluid upon separation of the coupling. On the other hand, the coupling is so constructed that the coupling members may be easily coupled manually without the application of a large force because the coupling may be connected by simply inserting one member into the other and relatively rotating these members. Moreover, there are no moving parts other than the coupling members themselves which are actuated and which might damage the apparatus or endanger the operator. However, US 2,509,444 gives no explicit hint regarding the longitudinal position of the holding, locking and resilient blocking means relative to the end of the respective coupling members. This positioning, however, is of great importance in connection with centering and accurate and secure connection and disconnection of the coupling. Furthermore, US 2,509,444 gives no hint to provide different projections and grooves for effectively handling environments where several containers with different contents are being used.

The invention aims to provide a coupling of the above-mentioned type which allows simple, fast, yet accurate connection and disconnection, in particular where several containers with different contents are being used.

### Definition of the invention

Accordingly, the coupling of the invention is characterised in that at least two of the projections are different in shape and/or width and the corresponding grooves are matched accordingly.

### Detailed description of the invention

It was found that by locating the said projection and/or the beginning of the groove away from the end of its wall, such that the second member is guided inside the first member over a certain length before the projection arrives at the beginning of the groove, centring is completed before opening of any of the seals takes place and rapid connection and disconnection of the coupling in hand can be effected accurately and safely without requiring more strength or skill of the operator.
It will generally be desirable for the various parts to be co-axial, that is to say for the cylindrical wall of the first member and the cylindrical wall of the second member to be co-axial and, moreover, for the said walls to lie on a common axis when the members are coupled.
Furthermore, in an environment where several containers with different contents are being used, it is preferred to provide two or more projections and corresponding grooves, with at least two of the projections being different in shape and/or width and the corresponding grooves being matched accordingly, in order to avoid a mix-up of interconnectable members.

The invention will be further explained by reference to the drawings in which an embodiment of a coupling of the invention is schematically shown.
Fig. 1 shows a schematic cross-section of a coupling in accordance with the present invention, at the first stage of establishing a connection.
Figs. 2 and 3 show a schematic cross-section of the coupling of Fig. 1, respectively at the second and third stage of establishing a connection.

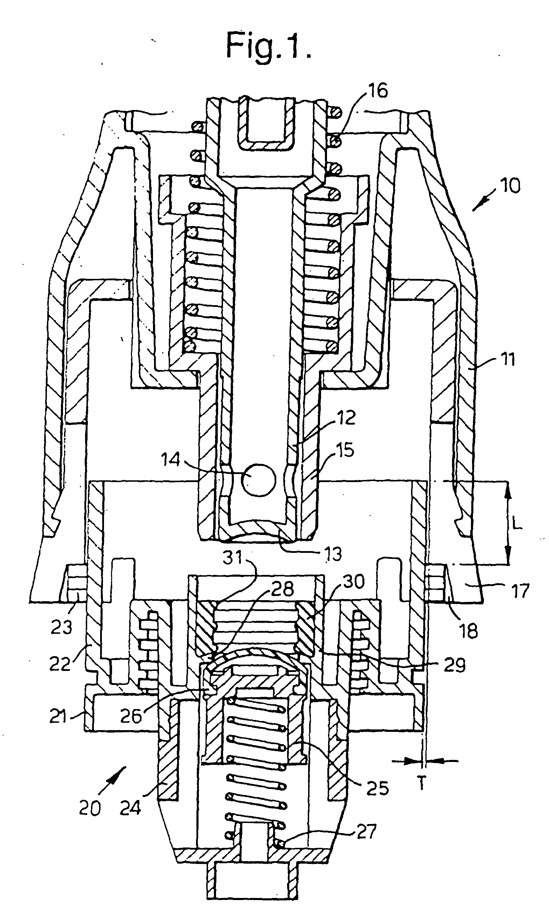

Fig. 1 shows a coupling for interconnecting two hollow bodies, such as a collapsible or rigid container and a tube, and allow fluid flow there between. The coupling comprises a first interconnectable member 10 comprising a housing 11 and, fitted within the housing 11, a hollow post 12 of which the interior communicates with the interior of the body to which the first member is attached. The post 12 has a closed end 13 and four openings 14 situated behind the closed end 13. The post 12 is surrounded by a seal sleeve 15 which is biased by a spring 16 into a position covering the openings 14 to prevent outflow from the interior of the post 12. The housing 11 is fitted with a cylindrical key 17, which is provided with spiral grooves 18 on its inner side and which preferably has an inner diameter within the range from 40 to 80 mm.

Fig. 1 further shows a second interconnectable member 20 comprising a cap 21 having a cylindrical portion or wall 22 having an outer diameter smaller than the inner diameter of the key 17 and provided with two projections 23 on its outer side. The projections 23 are each located at a distance from the end of the cylindrical wall 22, so that the second member 20 must be inserted into the first member over a certain length "L", for example 13 mm, before the projections 23 arrive at the beginning of the corresponding grooves 18. Said length "L" should preferably be in excess of 10 mm (and, for practical reasons, preferably be smaller than 25 mm).

Conversely, grooves can be provided on the outer side of the cap 21. In that case, projections should be provided on the inner side of the cylindrical wall of the first member located at a certain distance from the end the said wall. The pitch of the grooves 18 preferably exceeds the inner radius of the key 17, so as to enable connection through limited rotation of the members 10, 20.

A basket 24 is fitted in the under side of the cap 21, which basket 24 comprises a piston 25 provided with a piston head 26. The piston 25, 26 is biased by means of a spring 27 into a position closing an aperture 28 in the cap 21. The cap 21 comprises an annular raised edge 29, which has an inner diameter substantially equal to or slightly larger than the outer diameter of the seal sleeve 15 of the first member 10. A rubber ring 30 is fitted inside the annular edge 29, which ring 30 has a height smaller than the height of the annular edge 29 and has an inner diameter substantially equal to or slightly larger than the outer diameter of the post 12 of the first member 10. The ring 30 is provided with three annular ridges 31 on its inner surface, which will improve the close fit and, upon disconnection of the members 10, 20, will wipe the post 12 as it is drawn through the ring 30.

The piston head 26 is made of a flexible material, and its surface is convex. If the surface of the closed end 13 of the post 12 is concave, with the radius of the piston head 26 being selected smaller than the radius of the closed end 13 of the post 12, any liquid present between the said surfaces is displaced during connection of members 10, 20 and liquid build-up between the said surface, which results in spillage during disconnection of the members 10, 20, is avoided.

Fig. 1 shows the first stage of establishing the interconnection between the members 10 and 20. The tolerance "T" between the wall 22 and the key 17 (i.e., half the difference between the inner diameter of the key 17 and the outer diameter of the wall 22) amounts to 0.5 mm and preferably lies within a range from to 0.3 to 1.0 mm or, more, generally, within a range from 0.5 to 2 % of the inner diameter of the key 17. Owing to this tolerance the cap can be easily inserted in the said key 17. If the ratio of this tolerance "T" and the length "L" over which the second members must be inserted into the first member (i.e., "T/L") is smaller than 0.10, the centring of the members with respect to each other will occur securely and automatically and the risk of any of the projections 23 missing the beginning of the grooves 18 is avoided. Also, the post 12 and the piston 24 will also centre automatically during the next stage of establishing the connection. Said ratio preferably lies within a range from 0.001 to 0.05.

It is noted that the coupling may comprise two or more of the said projections and corresponding grooves, with at least two of the projections being different in shape and/or width and the corresponding grooves being matched accordingly. In an environment where several containers with different contents are being used, a mix-up of interconnectable members can be avoided by using different combinations of such different projections. The advantages of employing couplings with the ratio "T/L" in the forementioned range are all the more noticeable when the number of (different) projections in a particular coupling increases.

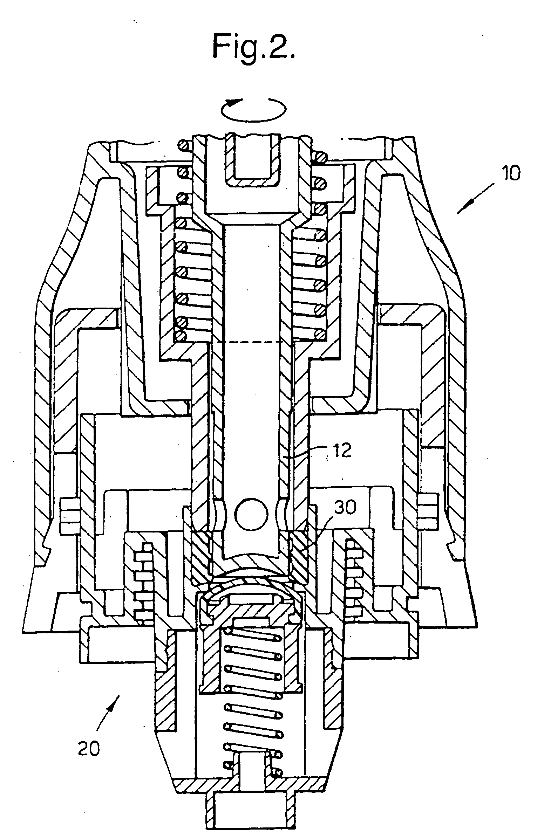

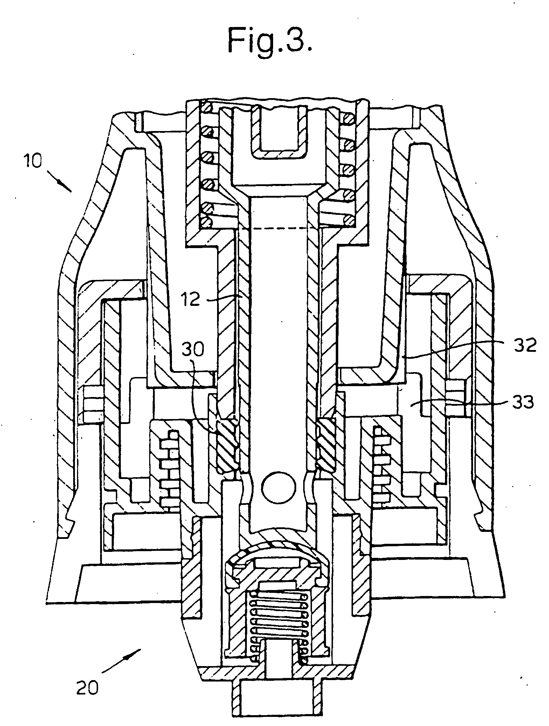

After insertion and centring, the members 10 and 20 are, as shown in figures 2 and 3, rotated with respect to one another, thus establishing contact between the seal sleeve 15 and the rubber ring 30. During further rotation, the post 12 starts moving relative to the biased seal sleeve 15 because the latter is halted by the said ring 30. By this action the post 12 is now inserted in and surrounded by the ring 30 and the ring 30 is (slightly) compressed in the axial direction by the seal sleeve 15 as result of which the ring 30 begins to expand (slightly) in the radial direction towards the post 12. In this stage, the friction between the post 12 and the ring 30 is still relatively low, so as to allow easy rotation of the members.

Figure 3 shows the final stage of establishing the connection. The members 10, 20 have been rotated over a total angle of approximately 45° and the ring 30 is compressed to such an extend that it completely seals off the post 12. The shape of the inner side of the ring 30 is now adapted to the shape of the post 12 and a close fit is obtained, even if the post 12 has been subjected to considerable wear after several years of use.

One of the members may be provided with a cam 32, whereas the other member is provided with a thin plastic finger 33. The cam 32 and finger 33 are positioned such that, during rotation of the members 10, 20, the cam 32 passes the finger 33, causing the finger 33 to bend and, substantially simultaneously to establishing an adequate connection, snap back into its original position so as to produce an audible sound, e.g. a distinct click, and warn the operator that no further rotation is required.

Alternatively, a finger can be provided in the key 17 at the end of at least one of the grooves 18. Once the projections 23 reach the end of their respective grooves and the members 10, 20 are rotated slightly further, the projection or projections 23 will pass the finger or fingers. Thus, the finger or fingers are caused to bend and snap back in manner similar to that described above or, in case of a rigid finger, the projection is halted until it slips abruptly and collides with a stop positioned behind (as seen in the direction of movement of the projection) the finger.

In a further development of the invention, one of the two members includes or is connected to a chamber having means for detecting the presence of liquid in the chamber. Preferably, this will be the member which is connected to a tube. This preferred feature is useful in systems handling a liquid product where it is necessary or desirable to detect that the container has emptied and then shut off a pump and/or sound an alarm calling for the container to be replaced. For detecting liquid in the chamber, the chamber may contain a Reed-element or spaced apart electrodes so that the liquid when present provides a conductive path between the electrodes. Whatever means are used to detect the presence of liquid, it may be desirable for the chamber to have a valve which is biased closed but arranged open to admit air to the chamber in the event that a pre-determined sub-atmospheric pressure is created within the chamber, for example if a pump drawing from the chamber is continuing to run when the supplying container is empty.

Although the form of the coupling according to the invention was described particularly for the application indicated above, it can also be employed in other applications where it would be advantageous to provide a coupling preventing leakage from two hollow bodies'when these are disconnected and also minimising spillage during the said disconnection.

Thus, the invention is not restricted to the above described embodiment which can be varied in a number ways within the scope of the claims.

## Claims

1. A coupling for interconnecting two hollow bodies, the coupling comprising first and second interconnectable members (10, 20) for attachment of each one to an orifice of a respective body so as to allow fluid flow between the interiors of the bodies when interconnected by the coupling and to seal the orifices when uncoupled, the first member (10) comprising a cylindrical wall (17), the second member (20) comprising a cylindrical wall (22) having an outer diameter that is smaller than the inner diameter of the wall (17) of the first member (10), wherein the cylindrical wall (17) of first member (10) is provided with two or more projections (23) or two or more grooves (18) on its inner side and the cylindrical wall (22) of the second member (20) is provided with corresponding grooves or projections (23), respectively, on its outer side, wherein the projections (23) and/or the beginning of the grooves are located at a distance (L) from the end of the respective cylindrical wall (22), wherein the ratio of the tolerance (T), between the cylindrical wall (17) of the first member (10) and the cylindrical wall (22) of the second member (20), and the said length (L) is smaller than about 0.1, **characterised in that** at least two of the projections (23) are different in shape and/or width and the corresponding grooves are matched accordingly.

2. A coupling according to claim 1, wherein the grooves (18) are spiral.

3. A coupling according to claim 2, wherein the pitch of the grooves (18) exceeds the inner radius of the cylindrical wall (17) of the first member (10).

4. A coupling according to any one of the preceding claims, wherein the first member (10) comprises a hollow post (12) of which the interior communicates with the interior of the body to which the first member (10) is attached, the hollow post (12) having a closed end (13) and at least one opening (14) behind the closed end (13), the first member (10) further comprising a sleeve (15) around the post (12) biased into a position sealing the opening (14),
the second member (20) comprises a piston (25, 26) within a hollow sheath (21, 24) of which the interior communicates with the interior of the body to which the second member (20) is attached, the piston (25, 26) being biased into a position closing an aperture (28) through an end portion of the sheath (21, 24),
the post (12), sleeve (15), piston (25, 26) and sheath (21, 24) being configured such that, upon connection of the members (10, 20), the closed end (13) of the post (12) extends through the aperture (28) in the sheath (21, 24) thereby displacing the piston (25, 26), displacing the sleeve (15) to a position for uncovering the opening (14) and allowing flow between the hollow interiors of the sheath (21, 24) and the post (12).

5. A coupling according to claim 4, wherein elastic ring (30) is present between the sheath (21) and the sleeve (15) which, upon connection of the members (10, 20), is compressed in the axial direction and expanded in the radial direction towards the post (12) so as to establish a close fit around the post (12).

6. A coupling according to claim 5, wherein the sheath (21) extends into an annular, raised ridge (29) which provides a seat for the elastic ring (30) and which limits or prevents expansion of the ring (30) in the radial direction away from the post (20).

7. A coupling according to claim 5 or 6, wherein the inner diameter of the ring (30) is larger than the outer diameter of the post (12).

8. A coupling according to any one of the preceding claims, wherein one of the members (10, 20) is attached to an orifice of a container and the other of the members is attached to a tube, the container preferably being a deformable bag.

## Patentansprüche

1. Kupplung zum Verbinden zweier hohler Körper, die ein erstes und ein zweites Element (10, 20) aufweist, die verbindbar und jeweils an eine Öffnung in einem zugehörigen Körper ansetzbar sind, um eine Fluidströmung zwischen den Innenräumen der Körper zu ermöglichen, wenn diese mittels der Kupplung miteinander verbunden sind, und bei getrennten Elementen die Öffnungen gegeneinander abzuschließen, wobei das erste Element (10) eine zylindrische Wandung (17) und das zweite Element (20) eine zylindrische Wandung (22) aufweisen, deren Außendurchmesser kleiner ist als der Innendurchmesser der Wandung (17) des ersten Elements (10), wobei die zylindrische Wandung (17) des ersten Elements (10) auf der Innenseite zwei oder mehr Vorsprünge (23) oder zwei oder mehr Nuten (18) und die zylindrische Wandung (22) des zweiten Elements (20) auf der Außenseite entsprechend Nuten bzw. Vorsprünge (23) aufweisen, wobei die Vorsprünge (23) und/oder der Anfang der Nuten sich in einer Entfernung (L) vom Ende der jeweiligen Wandung (22) befinden und das Verhältnis des Spiels (T) zwischen der zylindrischen Wandung (17) des ersten Elements (10) und der zylindrischen Wandung (22) des zweiten Elements (20) zur Länge (L) kleiner ist als etwa 0,1, **dadurch gekennzeichnet, dass** mindestens zwei der Vorsprünge (23) sich in der Gestalt und/oder der Breite unterscheiden und dass die entsprechenden Nuten zu ihnen jeweils passend ausgeführt sind.

2. Kupplung nach Anspruch 1, deren Nuten (18) spiralig geführt sind.

3. Kupplung nach Anspruch 2, bei der die Steigung der Nuten (18) den Innenradius der zylindrischen Wandung (17) des ersten Elements (10) übersteigt.

4. Kupplung nach einem der vorgehenden Ansprüche, bei der das erste Element (10) einen hohlen Pfosten (12) aufweist, dessen Inneres in Strömungsverbindung mit dem Inneren des Körpers steht, an den das erste Element (10) angesetzt ist, wobei der hohle Pfosten (12) ein geschlossenes Ende (13) und hinter diesem mindestens eine Öffnung (14) aufweist und das erste Element (10) weiterhin um den Pfosten (12) herum eine Hülse (15) aufweist, die in eine Lage vorgespannt ist, in der sie die Öffnung (14) schließt,
das zweite Element (20) einen Kolben (25, 26) in einer hohlen Ummantelung (21, 24) aufweist, deren Inneres mit dem des Körpers in Strömungsverbindung steht, an den das zweite Element (20) angesetzt ist, wobei der Kolben (25, 26) in eine Lage vorgespannt ist, in der er eine Öffnung (28) im Endbereich der Ummantelung (21, 24) schließt, und
der Pfosten (12), die Hülse (15), der Kolben (25, 26) und die Ummantelung (21, 24) so gestaltet sind, dass sich beim Verbinden der Elemente (10, 20) das geschlossene Ende des Pfostens (12) durch die Öffnung (28) in der Ummantelung (21, 24) erstreckt und dabei den Kolben (25, 26) verschiebt, wobei die Hülse (15) in eine Lage verschoben wird, in der sie die Öffnung (14) frei legt und die eine Strömung zwischen den Innenräumen der Ummantelung (21, 24) und des Pfostens (12) ermöglicht.

5. Kupplung nach Anspruch 4, bei der ein elastischer Ring (30) zwischen der Ummantelung (21) und der Hülse (15) vorliegt, der beim Verbinden der Elemente (10, 20) axial komprimiert und radial zum Pfosten (12) hin expandiert wird, um einen dicht passenden Sitz auf dem Pfosten (12) herzustellen.

6. Kupplung nach Anspruch 5, bei der die Ummantelung (21) sich in einen ringförmig umlaufenden vorstehenden Rand (29) hinein erstreckt, der einen Sitz für den elastischen Ring (30) bildet und ein Expandieren des Rings (30) radial vom Pfosten (12) weg begrenzt oder verhindert.

7. Kupplung nach Anspruch 5 oder 6, bei der der Innendurchmesser des Rings (30) größer ist als der Außendurchmesser des Pfostens (12).

8. Kupplung nach einem der vorgehenden Ansprüche, bei der eines der Elemente (10, 20) in eine Öffnung eines Behälters ein- und das andere Element an einen Schlauch angesetzt ist, wobei der Behälter vorzugsweise ein verformbarer Beutel ist.

## Revendications

1. Dispositif d'accouplement pour interconnecter deux corps creux, le dispositif d'accouplement comprenant un premier et un second élément (10, 20) susceptibles d'être interconnectés et destinés chacun à être attaché dans un orifice d'un corps respectif de façon à permettre un écoulement de fluide entre les intérieurs des corps lorsqu'ils sont interconnectés par le dispositif d'accouplement, et à isoler les orifices lorsqu'ils sont découplés, le premier élément (10) comprenant une paroi cylindrique (17), le second élément (20) comprenant une paroi cylindrique (22) ayant un diamètre extérieur qui est inférieur au diamètre intérieur de la paroi (17) du premier élément (10), la paroi cylindrique (10) du premier élément (10) étant pourvue de deux ou plusieurs projections (23) ou de deux ou plusieurs gorges (18) sur son côté intérieur, et la paroi cylindrique (22) du second élément (20) étant pourvue de gorges ou de projections correspondantes (23), respectivement, sur son côté extérieur, dans lequel les projections (23) et/ou le commencement des gorges sont placés à une distance (L) depuis l'extrémité de la paroi cylindrique respective (22), dans lequel le rapport de la tolérance (P) entre la paroi cylindrique (17) du premier élément (10) et la paroi cylindrique (22) du second élément (20), et ladite longueur (L) est inférieur à environ 0,1,
**caractérisé en ce que** deux des projections (23) au moins sont différentes quant à leur forme et/ou leur largeur, et les gorges correspondantes sont appariées en conséquence.

2. Dispositif d'accouplement selon la revendication 1, dans lequel les gorges (13) sont en spirale.

3. Dispositif d'accouplement selon la revendication 2, dans lequel le pas des gorges (18) dépasse le rayon intérieur de la paroi cylindrique (17) du premier élément (10).

4. Dispositif d'accouplement selon l'une quelconque des revendications précédentes, dans lequel le premier élément (10) comprend un pilier creux (12) dont l'intérieur communique avec l'intérieur du corps sur lequel est attaché le premier élément (10), le pilier creux (12) ayant une extrémité fermée (13) et au moins une ouverture (14) derrière l'extrémité fermée (13), le premier élément (10) comprenant en outre un manchon (15) autour du pilier (12) sollicité jusque dans une position qui étanche l'ouverture,
le second élément (20) comprend un piston (25, 26) à l'intérieur d'une chemise creuse (21, 24) dont l'intérieur communique avec l'intérieur du corps sur lequel est attaché le second élément (20), le piston (25, 26) étant sollicité jusque dans une position fermant une ouverture (28) à travers une partie terminale de la chemise (21, 24),
le pilier (12), le manchon (15), le piston (25, 26) et la chemise (21, 24) étant ainsi configurés que, lors de la connexion des éléments (10, 20), l'extrémité fermée (13) du pilier (12) s'étend à travers l'ouverture (28) dans la chemise (21, 24) en déplaçant ainsi le piston (25, 26), qui déplace le manchon (15) à une position pour découvrir l'ouverture (14) et permettre un écoulement entre les intérieurs creux de la chemise (21, 24) et du pilier (12).

5. Dispositif d'accouplement selon la revendication 4, dans lequel une bague élastique (30) est présente entre la chemise (21) et le manchon (15), laquelle est comprimée, lors de la connexion des éléments (10, 210) dans la direction axiale et étendue dans la direction radiale en direction des piliers (12) de façon à établir un engagement serré autour du pilier (12).

6. Dispositif d'accouplement selon la revendication 5, dans lequel la chemise (21) s'étend jusque dans une nervure annulaire dressée (29) qui constitue un siège pour la bague élastique (30) et qui limité ou empêche l'expansion de la bague (30) dans la direction radiale en éloignement du pilier (12).

7. Dispositif d'accouplement selon l'une ou l'autre des revendications 5 et 6, dans lequel le diamètre extérieur intérieur de la bague (30) est supérieur au diamètre extérieur du pilier (12).

8. Dispositif d'accouplement selon l'une quelconque des revendications précédentes, dans lequel l'un des éléments (10, 20) est attaché à un orifice d'un conteneur, et l'autre des éléments est attaché à un tube, le conteneur étant de préférence un sac déformable.
